Europäisches Patentamt

**European Patent Office**

**Office européen des brevets**

(19)

(11) Numéro de publication: **0 311 725**
**A1**

# (12) DEMANDE DE BREVET EUROPEEN

(21) Numéro de dépôt: **87420277.3**

(22) Date de dépôt: **14.10.87**

(51) Int. Cl.4: **G02C 11/00**

Revendications modifiées conformément à la règle 86 (2) CBE.

(43) Date de publication de la demande:
**19.04.89 Bulletin 89/16**

(84) Etats contractants désignés:
**BE CH DE ES GB IT LI NL**

(71) Demandeur: **S.A.R.L. MEMO**
**Zone d'Activités les 4 Andrées**
**F-69126 Brindas(FR)**

(72) Inventeur: **Meillet, Michel**
**145, Impasse de la Chataignière**
**F-69760 Limonest(FR)**

(74) Mandataire: **Karmin, Roger et al**
**Cabinet MONNIER 150, cours Lafayette**
**F-69003 Lyon(FR)**

(54) **Dispositif antivol pour des lunettes, notamment pour la vente dans des magasins à grande surface.**

(57) L'invention concerne un dispositif antivol pour présenter à la vente une paire de lunettes(9).

Le dispositif comporte un câble (2) bouclé sur lui-même par sertissage d'une cosse définissant une anse (4). Cette anse peut recevoir le clou (5) d'un disque antivol électronique (7) qui était connu pour s'adapter sur des tissus ou autres objets plats.
Application : possibilité pour un grand magasin d'utiliser un seul type de disques antivol (7) aussi bien pour des lunettes (9) que pour des objets plats ou autres articles.

EP 0 311 725 A1

La présente invention est relative à un dispositif antivol destiné à équiper des lunettes, et notamment celles qui sont proposées à la vente dans les magasins à grande surface.

On connaît l'importance de la perte financière que les vols à l'étalage représentent pour les grands magasins. Cette perte est particulièrement importante pour les vêtements et pour des objets de petites dimensions qu'un client indélicat peut facilement glisser dans sa poche.

Pour éviter cet inconvénient, il est connu d'utiliser des antivols qu'on fixe par un clou sur le tissu d'un vêtement. Le clou traverse sans dommage un pan du tissu, et sa pointe vient s'encastrer de façon irréversible dans un orifice cranté prévu à cet effet dans la matière plastique d'un disque. Dans cette matière est par ailleurs enrobée une puce électronique qui déclenche une alarme si quelqu'un tente de quitter le magasin de façon illicite en emportant l'objet muni de l'anti-vol.

En pratique, on prévoit que chaque caissière dispose d'une machine qui sépare le clou du disque. Le client honnête emporte donc son objet après l'avoir payé, et la caissière récupère les antivols qui peuvent alors être réutilisés sur d'autres objets.

Pour la direction du magasin, il est donc nécessaire de posséder un seul type d'antivols et de clous crantés, susceptibles d'être adaptés indifféremment sur tous les produits très divers que le magasin propose à sa clientèle.

La vente des lunettes pose à ce sujet un problème particulier aux magasins à grande surface. En effet :

- d'une part une paire de lunettes est un objet coûteux et facile à dissimuler, qui donne fréquemment lieu à des vols représentant pour le magasin une perte importante ;
- d'autre part la forme d'une paire de lunettes ne permet pas l'adaptation direct du clou et du disque antivol que le magasin utilise pour .des articles plats et perforables comme les vêtements.

Ce dernier point est tellement important que les grands magasins renoncent le plus souvent à présenter les lunettes en vente libre sur leurs étalages linéaires.

La présente invention a pour but d'éviter ces inconvénients en réalisant un dispositif antivol facile à adapter sur une paire de lunettes et capable de recevoir l'appareil à clou et disque dont sont équipés les magasins.

Un dispositif antivol selon l'invention, destiné à être adapté sur une paire de lunettes pour recevoir l'appareil antivol connu à clou et à disque électronique, est caractérisé en ce qu'il est constitué par un tronçon de câble souple présentant :

- à une extrémité, une anse susceptible de recevoir le clou de l'appareil antivol à disque ;
- à l'autre extrémité, une boucle assez large pour qu'on puisse y passer l'anse ;
- une longueur totale suffisamment grande pour permettre une adaptation autour de la traverse centrale de la monture des lunettes, mais suffisamment faible pour interdire alors tout dégagement par passage autour d'un des verres de la monture.

Suivant une autre caractéristique de l'invention, l'anse est elle-même constituée par une boucle où le câble est refermé sur lui-même, si bien que le dispositif se présente sous la forme d'un tronçon de câble bouclé sur lui-même à chacune de ses deux extrémités.

Suivant une autre caractéristique de l'invention, l'anse est constituée par une cosse percée qu'on sertit sur les deux extrémités jointes du câble bouclé sur lui-même.

Dans tous les cas, on réalise ainsi un dispositif dans l'anse duquel peut facilement être adapté le clou d'un disque antivol connu, et ceci aussi bien si la monture de lunettes est présentée nue à la vente, ou si elle est présentée sous un emballage en matière plastique perforable.

Le dessin annexé, donné à titre d'exemple, permettra de mieux comprendre l'invention, les caractéristiques qu'elle présente et les avantages qu'elle est susceptible de procurer :

Fig. 1 montre une paire de lunettes près de laquelle se trouve un dispositif selon l'invention.

Fig. 2 montre le dispositif adapté sur la monture.

Fig. 3 est une vue éclatée illustrant la manière dont on peut ensuite mettre en place un appareil antivol à disque électronique de type connu.

Fig. 4 est une coupe suivant IV-IV (fig. 3) après assemblage.

Fig. 5 illustre une variante de réalisation du dispositif selon l'invention.

Fig. 6 montre comment on referme le dispositif sur lui-même autour de la traverse centrale ou "nez" d'une monture de lunettes.

Fig. 7 illustre cette variante posée sur une paire de lunettes.

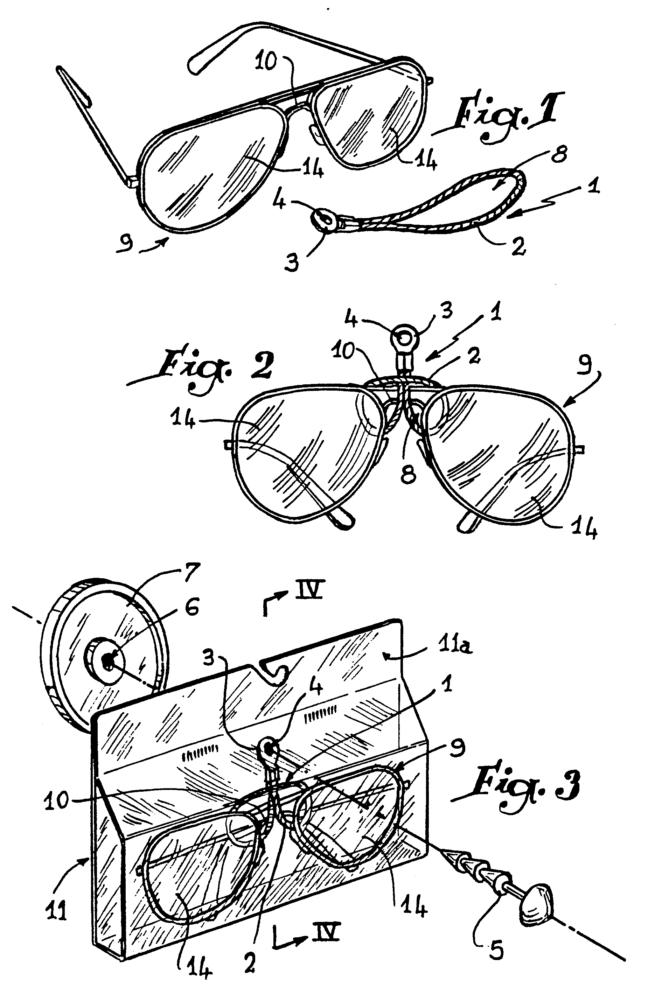

Le dispositif 1 illustré sur les fig. 1 à 4 comprend un tronçon 2 d'un câble métallique souple et inextensible. Les deux extrémités du câble sont serties côte à côte dans une cosse 3 à patte perforée. Ainsi, la perforation 4 de la cosse 3 forme une anse susceptible de recevoir un clou cranté connu, adaptable dans la perforation centrale 6 d'un disque antivol électronique 7 d'un type également connu.

De plus, refermé sur lui-même, le câble 2 définit une large boucle 8.

Le fonctionnement est le suivant :

Pour adapter le dispositif 1 sur une paire de lunettes 9 (fig. 1), on le présente devant la traverse centrale ou "nez" 10. On le passe autour de cette traverse, puis on tire à travers la boucle 2, la cosse 3 qui dépasse latéralement comme illustré sur la fig. 2. Ainsi, l'épaisseur et l'encombrement des lunettes 9 ne sont plus un obstacle à l'emboîtement du clou 5 dans le disque 7 après avoir traversé l'anse 4 que forme la cosse 3.

On voit que cette adaptation est possible :

- non seulement si les lunettes sont présentées nues à la vente (fig. 2) ;
- mais aussi lorsqu'elles sont emballées dans un boîtier ou blister 11 qui peut être dur, souple ou semi-rigide.

On sait qu'un tel blister est souvent constitué par une coque en matière plastique transparente comportant au moins une zone périphérique plate 11a. Il suffit de disposer l'anse 4 de la cosse 3 entre les deux épaisseurs de la zone plate 11a. Ensuite, on enfonce le clou 5 à travers l'anse 4, en perforant au passage la matière plastique de cette zone 11a, et l'on y adapte à la manière connue le disque antivol 7.

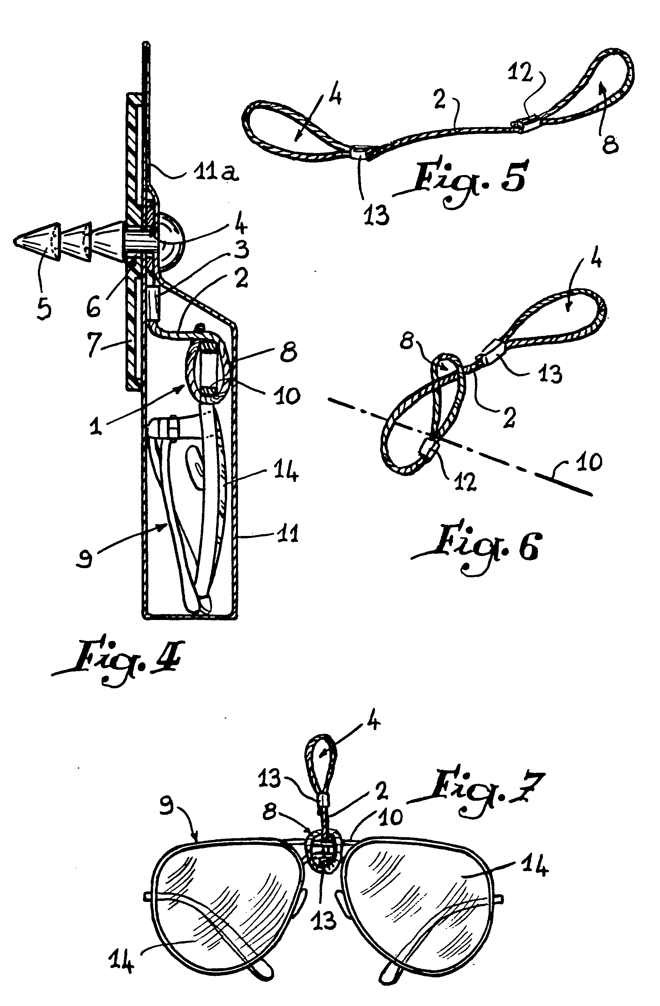

On a représenté en fig. 5 à 7 une variante où le tronçon de câble 2 est bouclé sur lui-même par deux sertissages 12 et 13 pour définir :

- la boucle 8 à l'une de ses extrémités ;
- l'anse 4 à son autre extrémité.

La mise en place s'effectue comme précédemment en passant l'anse 4 à travers la boucle 8, après avoir disposé l'ensemble autour de la traverse 10 de la monture des lunettes 9 (fig. 6 et 7). Ici encore, l'anse 4 est alors prête à recevoir le clou 5 et le disque 7 de type connu, et ceci que les lunettes soient présentées à la vente nues ou sous blister.

Bien entendu, on fait en sorte que le tronçon de câble 2 soit d'une longueur insuffisante pour permettre qu'après mise en place (fig. 2, 3, 4, 6, 7), le dispositif puisse être dégagé intempestivement par passage autour d'un des verres 14.

**Revendications**

1. Dispositif antivol destiné à être adapté sur une paire de lunettes (9) pour recevoir l'appareil antivol connu à clou (5) et à disque électronique (7), caractérisé en ce qu'il est constitué par un tronçon de câble souple (2) présentant :

- à une extrémité, une anse (4) susceptible de recevoir le clou (5) de l'appareil antivol à disque (7) ;
- à l'autre extrémité, une boucle (8) assez large pour qu'on puisse y passer l'anse (4) ;
- une longueur totale suffisamment grande pour permettre une adaptation autour de la traverse centrale ou "nez" (10) des lunettes (9).

2. Dispositif antivol suivant la revendication 1, caractérisé en ce que l'anse (4) est constituée par la perforation d'une cosse (3) sertie à la fois sur les deux extrémités placées côte à côte du câble (2) bouclé sur lui-même pour former la boucle (8).

3. Dispositif antivol suivant la revendication 1, caractérisé en ce que l'anse (4) est elle-même constituée par une boucle où le câble (2) est refermé sur lui-même, si bien que le dispositif se présente sous la forme d'un tronçon de câble (2) pourvu d'une boucle (4, 8) à chacune de ses deux extrémités (fig. 5).

4. Dispositif suivant la revendication 3, caractérisé en ce que le câble (2) est refermé sur lui-même par un sertissage (12) pour constituer la boucle (8) et (13) pour l'anse (4).

5. Dispositif suivant l'une quelconque des revendications précédentes, caractérisé en ce que, présenté autour de la traverse centrale (10) d'une monture de lunettes, il permet de tirer l'anse (4) à travers la boucle (8), pour recevoir ensuite le clou (5) du disque antivol électronique (7).

6. Dispositif suivant l'une quelconque des revendications précédentes, caractérisé en ce qu'une zone plate (11a) d'un emballage (11) est serti entre la tête du clou (5) et la rondelle antivol (7).

Revendications modifiées conformément à la règle 86(2) CBE.

1. Dispositif antivol destiné à être adapté sur une paire de lunette pour recevoir un appareil antivol connu, comprenant un clou s'enfonçant dans un disque électronique, caractérisé en ce qu'il comprend des moyens d'entourer la traverse centrale ou "nez" (10) des lunettes (9) et de coopérer avec l'appareil antivol (5, 7).

2. Dispositif antivol suivant la revendication 1, caractérisé en ce qu'il est constitué par un tronçon de câble souple (2) présentant :

- à une extrémité, une anse (4) susceptible de recevoir le clou (5) de l'appareil antivol à disque (7) ;
- à l'autre extrémité, une boucle (8) assez large pour qu'on puisse y passer l'anse (4) ;
- une longueur totale suffisamment grande pour permettre une adaptation autour de la traverse centrale ou "nez (10) des lunettes (9).

3. Dispositif antivol suivant la revendication 2, caractérisé en ce que l'anse (4) est constituée par la perforation d'une cosse (3) sertie à la fois sur les deux extrémités côte-à-côte du câble (2) bouclé sur lui-même pour former la boucle (8).

4. Dispositif antivol suivant la revendication 2, caractérisé en ce que l'anse (4) est elle-même constituée par une boucle où le câble (2) est refermé sur lui-même, si bien que le dispositif se présente sous la forme d'un tronçon de câble (2) bouclé sur lui-même à chacune de ses deux extrémités (fig. 5)

5. Dispositif suivant la revendication 3, caractérisé en ce que le câble (2) est refermé sur lui-même par un sertissage (12) pour la boucle (8) et (13) pour l'anse (4).

6. Dispositif suivant l'une quelconque des revendications 2 à 5, caractérisé en ce que, présenté autour de la traverse centrale (10) d'une monture de lunettes, il permet de tirer l'anse (4) à travers la boucle (8), pour recevoir ensuite le clou (5) du disque antivol électronique (7).

Fig. 1

Fig. 2

Fig. 3

*Fig. 5*

*Fig. 6*

*Fig. 4*

*Fig. 7*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 600 431  (M. MEILLET) <br> * En entier * <br> --- | 1-6 | G 02 C  11/00 |
| A | FR-A-2 417 790  (Y. BAGLIN) <br> --- | | |
| A | FR-A-2 445 538  (HENNERT) <br> --- | | |
| A | US-A-3 785 183  (P.F. SANDER) <br> --- | | |
| A | US-A-3 911 534  (H.J. MARTENS) <br> ----- | | |

**DOMAINES TECHNIQUES RECHERCHES (Int. Cl.4)**

G 02 C  11/00
E 05 B  73/00

Le présent rapport a été établi pour toutes les revendications

| Lieu de la recherche | Date d'achèvement de la recherche | Examinateur |
|---|---|---|
| LA HAYE | 10-06-1988 | CALLEWAERT-HAEZEBROUCK H |